# EUROPÄISCHE PATENTSCHRIFT

(11) **EP 2 532 225 B1**
(45) Veröffentlichungstag und Bekanntmachung des Hinweises auf die Patenterteilung: **12.02.2014**
(21) Anmeldenummer: 11450153.9
(22) Anmeldetag: 19.12.2011
(51) Int. Cl.: A01G 13/00

(54) **Pflanzenschutzhülle**
Protective casing for plants
Enveloppe de protection de plantes

(30) Priorität: 14.07.2011 AT 39911 U
(43) Veröffentlichungstag der Anmeldung: 12.12.2012
(73) Patentinhaber: Witasek, Peter, 9560 Feldkirchen (AT)
(72) Erfinder: Witasek, Peter, 9560 Feldkirchen (AT)
(74) Vertreter: Beer & Partner Patentanwälte KG

(56) Entgegenhaltungen:
- WO-A1-01/31997
- AU-B2- 513 768
- DE-U1- 20 211 978
- US-A- 5 471 783
- US-A1- 2008 060 961

## Beschreibung

Die Erfindung betriff eine Pflanzenschutzhülle mit den Merkmalen des einleitenden Teils von Anspruch 1 (US 5 471 783 A).

Pflanzenschutzhüllen der hier in Betracht gezogenen Art sind bekannt. In diesem Zusammenhang wird auf die AT 005 520 U1, die AT 11 447 U1 (= EP 2 324 699 A1) und die AT 11 667 U1 verwiesen.

Die bekannten Pflanzenschutzhüllen haben sich an sich gut bewährt, da sie insbesondere junge Pflanzen vor Wildverbiss, Unkrautbekämpfungsmitteln schützen oder auch verhindern, dass Bodenbearbeitungsgeräte die jungen Pflanzen beschädigen.

Bei der Pflanzenschutzhülle, wie sie aus der AT 11 667 U1 bekannt ist, ist vorgesehen, dass die Pflanzenschutzhülle im Bereich des oberen Endes ihres rohrförmigen Körpers Durchbrechungen aufweist. So ergibt sich bei der bekannten Pflanzenschutzhülle der Effekt, dass der in Gebrauchslage untere, geschlossene Teil der Pflanzenschutzhülle einen Schutz der Pflanze gegenüber Herbiziden und auch Schutz vor Pflanzen bei mechanischer Unkrautbekämpfung gibt, wogegen der obere mit Durchbrechungen versehene Bereich dazu dient, die Pflanze an die Umgebung anzupassen, wenn sie während ihres Wachstums diesen Bereich erreicht.

Problematisch bei Pflanzenschutzhüllen mit von vornherein offenen Durchbrechungen ist es, dass diese den jeweiligen Anforderungen der Pflanze und des Verwendungsortes nicht angepasst werden können.

Aus der US 5 471 783 A ist eine gattungsgemäße Pflanzenschutzhülle bekannt. Im Mantel der bekannten Pflanzenschutzhülle sind dreiseitig freigeschnittene Zungen mit rechteckiger Umrissform bekannt. Die Zungen können zum Herstellen von Öffnungen in der Pflanzenschutzhülle um eine oberhalb der Zunge liegende Biegelinie aus dem Mantel der Pflanzenschutzhülle herausgebogen werden.

Der Erfindung liegt die Aufgabe zugrunde eine Pflanzenschutzhülle der eingangs genannten Gattung zur Verfügung zu stellen, deren Öffnungen hinsichtlich Zahl und Öffnungsquerschnitt an jeweils gegebene Erfordernisse angepasst werden können.

Gelöst wird diese Aufgabe erfindungsgemäß mit einer Pflanzenschutzhülle, welche die Merkmale von Anspruch 1 aufweist.

Bevorzugte und vorteilhafte Ausgestaltungen der Erfindung sind Gegenstand der Unteransprüche.

Da bei der erfindungsgemäßen Pflanzenschutzhülle im Wandbereich der Pflanzenschutzhülle wenigstens eine Anstanzung (Stanzlinie, Schnitt) vorgesehen ist, die eine aus der Wand - bezogen auf die Pflanzenschutzhülle - nach Innen oder nach Außen herausdrückbare Zunge ergibt, besteht die Möglichkeit, die das Ausmaß des wirksamen, freien Querschnittes den jeweiligen Erfordernissen angepasst zu wählen. Es genügt einfach die Zunge aus der Wand herauszudrücken und mehr oder weniger weit nach Innen oder nach Außen umzubiegen. Bei - bevorzugt vorgesehenen mehreren - Zungen kann überdies die Zahl der für den Durchtritt freigegebenen ("geöffneten") Öffnungen frei gewählt werden.

Besonders vorteilhaft ist es, wenn bei der Ausführungsform der Erfindung die Anstanzung so ausgebildet ist, dass sie eine Zunge mit einem schmaleren Wurzelbereich und einem gegenüber diesen verbreiterten Kopfbereich ergibt, da bei dieser Ausführungsform einfach eine große Öffnung hergestellt werden kann, wobei das Umbiegen der Zunge wegen des schmalen Fußbereiches problemlos möglich ist.

Weitere Einzelheiten und Merkmale der Erfindung ergeben sich aus der nachstehenden Beschreibung bevorzugter Ausführungsbeispiele anhand der Zeichnungen. Es zeigt:
- Fig. 1: eine erste Ausführungsform einer erfindungsgemäß Pflanzenschutzhülle in Gebrauchslage,
- Fig. 2: einen Zuschnitt aus dem die Pflanzenschutzhülle gemäß Fig. 1 hergestellt werden kann,
- Fig. 3: eine andere Ausführungsform einer erfindungsgemäßen Pflanzenschutzhülle,
- Fig. 4: eine zylindrische Ausführungsform einer erfindungsgemäßen Pflanzenschutz-hülle und
- Fig. 5 bis 10: mögliche Ausführungsformen von Freistanzungen zum Bilden von Öffnungen in erfindungsgemäßen Pflanzenschutzhüllen.

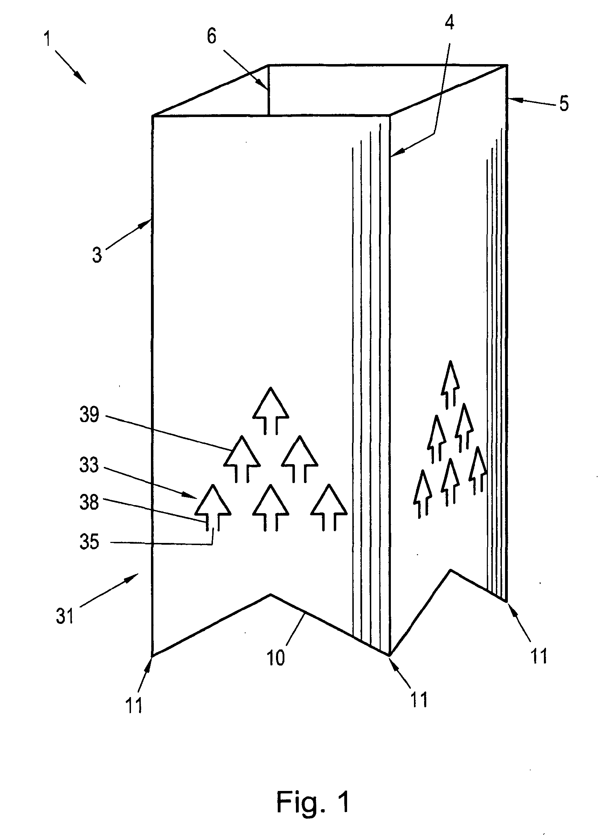

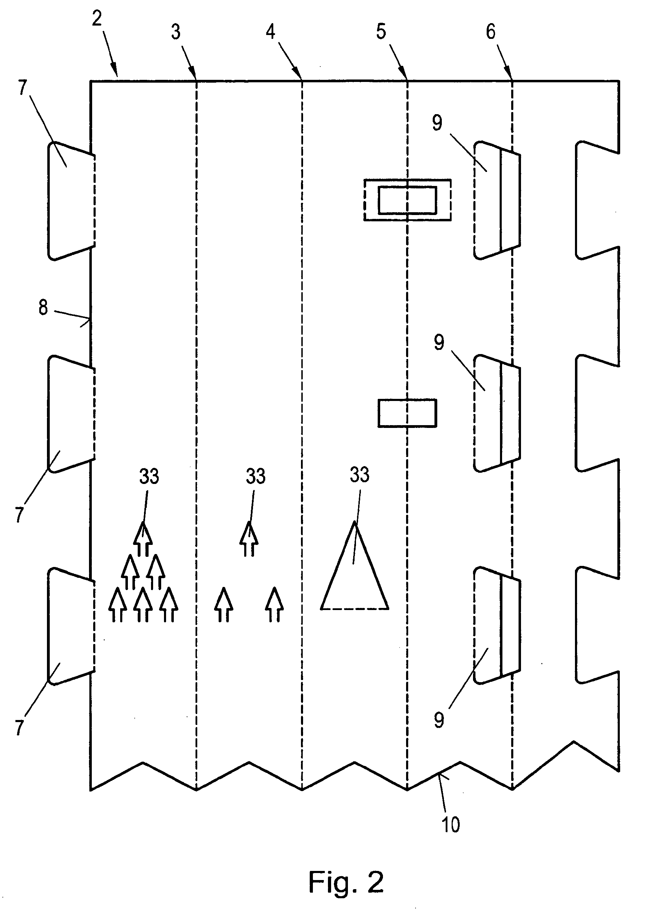

Eine Pflanzenschutzhülle 1 (Fig. 1) besteht aus einem Zuschnitt 2 aus blattförmigem Werkstoff, wie er in Fig. 2 gezeigt ist. Um den Zuschnitt 2 zu der Pflanzenschutzhülle 1 in Form einer Röhre mit quadratischem Querschnitt zu schließen, wird dieser entlang von vier Kanten 3, 4, 5 und 6 abgewinkelt und zu einer Röhre gebogen, wobei Laschen 7 an dem einen Rand 8 des Zuschnittes 2 in Löcher 9 im Bereich der Kante 6 gesteckt werden, sodass der Zuschnitt 2 in der zur quadratischen Röhre geformten Zustand gehalten wird.

Der in der Gebrauchslage untere Rand 10 des Zuschnittes 2 ist gezackt ausgebildet, sodass sich, wie aus Fig. 1 ersichtlich, im Bereich des unteren Endes der quadratischen Röhre im Bereich jeder Kante 3, 4, 5 und 6 vorspringende Spitzen 11 ergeben.

Dadurch, dass am unteren Rand 10 der die Pflanzenschutzhülle 1 bildende quadratischen Röhre Spitzen 11 vorgesehen sind, kann die Pflanzenschutzhülle 1 rings um eine junge Pflanze einfach in den Boden eingedrückt werden. So kann ein im Wesentlichen dichter Abschluss am unteren Ende der Pflanzenschutzhülle 1 erreicht werden. Dieser dichte Abschluss am unteren Ende der Pflanzenschutzhülle ist vorteilhaft, weil kein nachteiliger Kamineffekt eintritt. Durch die Pflanzenschutzhülle 1 wird, wenn sie aus durchscheinendem und UV-stabilem Polypropylen besteht, die Wirkung eines Kleingewächshauses erzielt, sodass ein besseres Wachstum der jungen Pflanze, z.B. einer Weinpflanze, gewährleistet ist.

Die erfindungsgemäße Pflanzenschutzhülle 1 schützt die junge Pflanze auch vor aufgebrachten Herbiziden.

Durch die erfindungsgemäßen Pflanzenschutzhülle 1 wird, da sie in den Boden eingedrückt werden kann, ein besserer Schutz und ein sicherer Sitz auch bei mechanischer Unkrautbekämpfung im Bereich der jungen Pflanzen erreicht, weil sich die Spitzen 11 am unteren Ende der Pflanzenschutzhülle 1 im Boden verkrallen und so Zwischenstock-Räumgeräten Widerstand leisten, sodass beim Arbeiten mit Zwischenstock-Räumgeräten ein Verschieben der Pflanzenschutzhülle 1 und damit eine Beschädigung der jungen Pflanze verhindert ist.

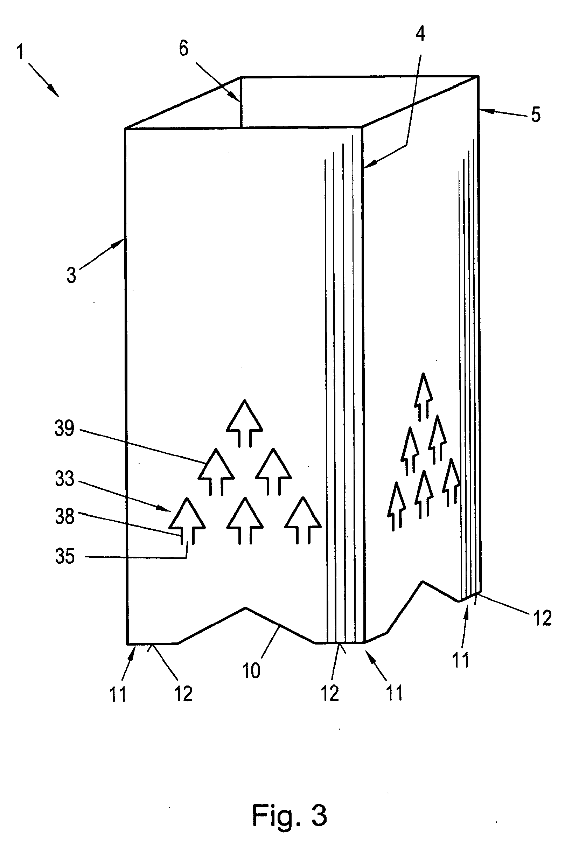

Bei der in Fig. 3 gezeigten Ausführungsform einer erfindungsgemäßen Pflanzenschutzhülle 1 in Form einer Rebschutzhülle sind, im Bereich des unteren Endes der Röhre im Bereich jeder Kante 3, 4, 5 und 6 gewinkelte Vorsprünge 11 mit abgeflachten Spitzen vorgesehen. Beispielsweise haben die Vorsprünge 11 mit abgeflachten, freien Enden 12 ("Bodenkrallen") die Form von gewinkelten Trapezen. Die Vorsprünge 11 mit abgeflachten Spitzen haben den Vorteil, dass sich die Vorsprünge 11 beim Eindrücken in den Boden auch dann nicht verformen (umbiegen), wenn der Boden hart ist.

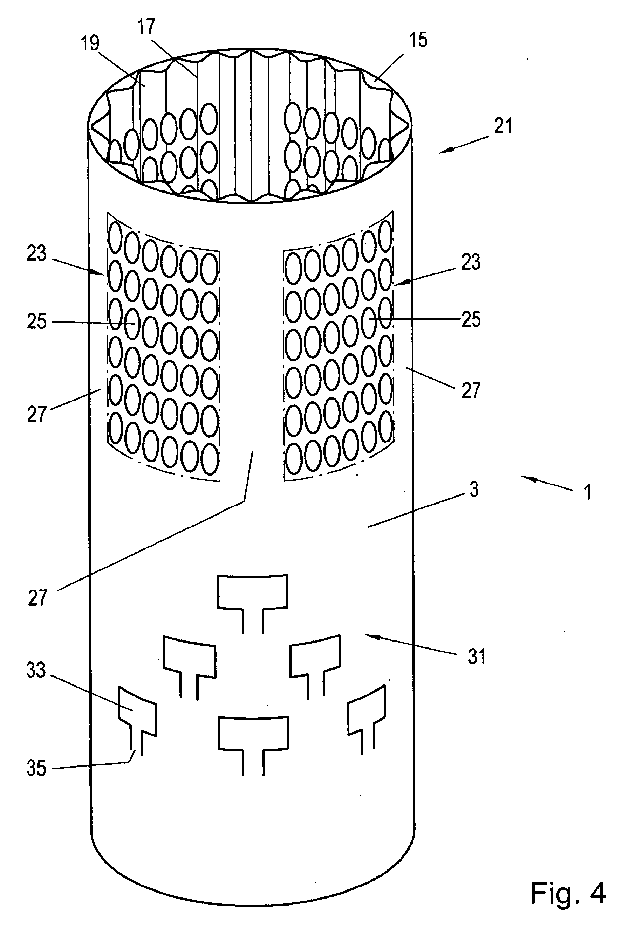

Eine Pflanzenschutzhülle 1, die im in Fig. 4 gezeigten Ausführungsbeispiel als Pflanzenschutzsäule ausgebildet ist, besitzt einen rohrförmigen Körper 3, der im gezeigten Ausführungsbeispiel die Form des Mantels eines Kreiszylinders hat. In der Praxis wird der Körper 3 freilich nicht genau die Form des Mantels eines Kreiszylinders haben.

In Praxis können für die erfindungsgemäße Pflanzenschutzhülle rohrförmige Körper 3 verwendet werden, die Längen von 40, 60, 80, 100 und 120 cm aufweisen und beispielsweise einen Innendurchmesser (Wuchsraumdurchmesser) von 10 cm besitzen. Diese Maßangaben sind lediglich Beispiele, da jede(r) andere Länge und/oder Durchmesser des rohrförmigen Körpers 3 einer erfindungsgemäßen Pflanzenschutzhülle 1 möglich ist.

Die Wand 15 des rohrförmigen Körpers 3, die also dem Mantel eines Zylinders, im gezeigten Beispiel eines (Kreis-)Zylinders, entspricht, besitzt an ihrer Innenseite längslaufende (achsparallele) Rippen 17 und zwischen diesen angeordnete Nuten 19.

In dem in der Gebrauchslage oberen Endbereich 21 des rohrförmigen Körpers 3 sind Bereiche 23 vorgesehen, in welchen Durchbrechungen 25 (Löcher) vorgesehen sind. Im gezeigten Ausführungsbeispiel sind die Durchbrechungen 25 länglich ovale Löcher, deren längere Abmessung in Richtung der Länge (Achse) des rohrförmigen Körpers 3 verläuft.

Im gezeigten Ausführungsbeispiel ist weiters vorgesehen, dass die Bereiche 23 mit Durchbrechungen 25 durch Streifen 27, in denen keine Durchbrechungen 25 vorgesehen sind, unterteilt sind, sodass über den Umfang des rohrförmigen Körpers 3 mehrere Bereiche 23, beispielsweise vier Bereiche 23 mit Durchbrechungen vorgesehen sind, die jeweils voneinander durch unterbrechungsfreie (lochfreie, geschlossene) Streifen 27 voneinander getrennt sind.

In einer bevorzugten Ausführungsform sind die Durchbrechungen 25 in mehreren Radialebenen (zur Länge des Körpers 3 normale Ebenen) angeordnet.

Wie, insbesondere in den Fig. 1, 3 und 4 gezeigt, sind aus der Wand der erfindungsgemäßen Pflanzenschutzhülle 1, insbesondere in deren unterem Bereich 31 (der Bereich, der in Gebrauchslage dem Boden näher liegt) eine, zwei oder mehrere Zungen 33 vorgesehen. Diese Zungen 33 werden durch dreiseitiges Freischneiden (Anstanzungen, Stanzlinien, Schnitte) aus dem Werkstoff, aus dem die Pflanzenschutzhülle 1 besteht, gebildet, sodass am unteren Ende der Zunge 33 ein Bereich 35 vorgesehen ist, über den die Zunge 33, mit dem Werkstoff der Wand der Pflanzenschutzhülle 1 verbunden bleibt. Der Bereich 35 bildet den Biegebereich (Biegelinie), um den der Werkstoff der Wand der Pflanzenschutzhülle 1 geknickt (gebogen) wird, wenn die Zunge 33 nach Innen oder nach Außen aus der Wand der Pflanzenschutzhülle 1 herausgebogen wird, um in der Wand eine Öffnung zu bilden.

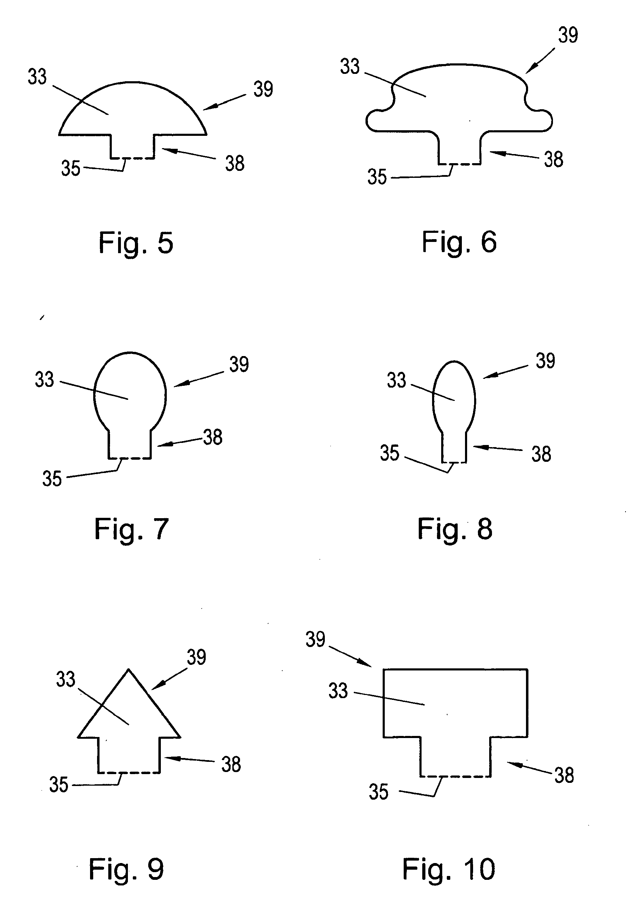

Die Zunge 33 und die diese begrenzenden Anstanzungen können weitestgehend beliebige Umrissformen aufweisen, wobei Umrissformen mit geraden und/oder gebogenen Rändern in Betracht gezogen sind. Beispiele für die Form von Anstanzungen sind in den Fig. 5 bis 10 gezeigt.

Die Zungen 33 haben einen schmaleren Fußbereich 38 und einen gegenüber diesem verbreiterten Kopfbereich 39, wie dies in den Fig. 5 bis 10 in verschiedenen Ausführungsbeispielen gezeigt ist.

So zeigt Fig. 5 eine Zunge 33 in Form eines Pilzes, wobei der Fußbereich 38 rechteckig oder quadratisch ist und der obere Bereich, also der Kopfbereich 39 der Zunge 33 halbkreis- oder kreissegmentförmig ist.

Bei der in Fig. 6 gezeigten Ausführungsform ist der obere Kopfbereich 39 der freigestanzten Zunge 33 mehrfach gebogen ausgebildet und weist eine Umrissform auf, die einen konvex gebogenen und zwei seitlich konkav gebogene Bereiche aufweist.

Bei der in Fig. 7 gezeigten Ausführungsform besitzt die Zunge 33 einen rechteckförmigen Fußbereich 38 und einen olivenförmig gebogenen Kopfbereich 39.

Die in Fig. 8 gezeigte Ausführungsform der erfindungsgemäßen Zunge 33, die durch dreiseitiges Anstanzen der Wand der Pflanzenschutzhülle gebildet ist, ist ähnlich der in Fig. 10 gezeigten Ausführungsform, wobei der Kopfbereich 39 schlanker (schmaler) ausgebildet ist.

Die in Fig. 9 gezeigte Ausführungsform einer Zunge 33 besitzt einen rechteckigen Fußteil 38 und einen dreieckförmigen Kopfteil 39.

Bei der in Fig. 10 gezeigten Ausführungsform besteht die dreiseitig aus dem Wandmaterial der Pflanzenschutzhülle 1 freigestanzten Zunge 33 aus einem rechteckigen Fußbereich 38 und einem rechteckigen Kopfbereich 39, wobei der Kopfbereich 39 so ausgerichtet ist, dass die längere Seite quer zur Längsachse der Pflanzenschutzhülle 1 und parallel zum Bereich 35 (Biegelinie) ausgerichtet ist.

Die Zungen 33 können in der Pflanzenschutzhülle 1 in beliebiger Anordnung vorgesehen sein. In Betracht gezogen ist, dass Zungen 33 in diskreten Bereiche, z.B. polygonale, insbesondere dreieckförmige Bereiche, angeordnet sind. Zungen 33 können, insbesondere bei zylindrischen Pflanzenschutzhüllen 1, über den Umfang der Pflanzenschutzhülle 1 verteilt, oder nur in wenigstens einem diskreten Bereich vorgesehen sein. Bei Pflanzenschutzhüllen 1 mit prismatischer Form der Röhre können Zungen 33 in einer, zwei oder mehreren, beispielsweise allen Seiten vorgesehen sein.

In Betracht gezogen ist es auch, die Zungen 33 in unterschiedlich ausgebildeten Gruppen anzuordnen. Weiters ist in Betracht gezogen in einer Pflanzenschutzhülle 1 verschieden ausgebildete Zungen 33 und/oder Zungen 33 zu verschieden ausgebildeten Gruppen zusammengefasst vorzusehen, wie dies z.B. in Fig. 2 angedeutet ist.

Weiters ist nicht zwingend, dass Zungen 33 in allen Wänden (Flächen) prismatischer Pflanzenschutzhüllen 1 vorgesehen sind. Zungen 33 können, wie erwähnt, in einer, zwei, drei Flächen von Pflanzenschutzhüllen 1 vorgesehen sein.

Zusammenfassend kann eine Ausführungsform der Erfindung wie folgt beschrieben werden:

Eine Pflanzenschutzhülle 1 mit prismatischem (polygonalem) oder rundem Querschnitt besitzt in ihrem Wandbereich, insbesondere in dem in Gebrauchslage weiter unteren Wandbereich 31 aus dem Wandbereich herausdrückbare dreiseitig freigestanzte Zungen 33. Diese Zungen 33 weisen einen schmalen Fußbereich 38, über den sie mit dem Wandwerkstoff der Pflanzenschutzhülle verbunden sind, und einen breiteren Kopfbereich 39 auf. Die Zungen können bei Bedarf, um eine Biegelinie, die in dem Bereich 35 liegt, in dem die Zunge 33 mit der Wand der Pflanzenschutzhülle 1 verbunden ist, zum Bilden von Ventilationsöffnungen umgebogen werden. Durch Wahl der Ausrichtung der Zungen gegenüber der Ebene der Wand kann die Größe des wirksamen freien Querschnittes der gebildeten Öffnung, je nach Bedarf eingestellt werden.

## Patentansprüche

1. Pflanzenschutzhülle (1) in Form einer über eine Pflanze zu steckenden Röhre, wobei in der Wand der Pflanzenschutzhülle (1) wenigstens eine dreiseitig freigeschnittene Zunge (33) vorgesehen ist, die zum Bilden von Ventilationsöffnungen durch Umbiegen um eine Biegelinie aus der Wand bezogen auf die Pflanzenschutzhülle nach innen oder nach außen herausdrückbar ist, wobei die Biegelinie in dem Bereich (35) liegt, in dem die Zunge (33) mit der Wand der Pflanzenschutzhülle (1) verbunden ist, **dadurch gekennzeichnet, dass** die Zunge (33) einen schmaleren mit der Wand der Pflanzenschutzhülle (1) verbundenen Fußbereich (38) und einem gegenüber dem Fußbereich (38) breiteren Kopfbereich (39) aufweist und dass der Kopfbereich (39) der Zunge (33) in Gebrauchslage oberhalb des Fußbereiches (38) angeordnet ist.

2. Pflanzenschutzhülle nach Anspruch 1, **dadurch gekennzeichnet, dass** die Zunge (33) in dem in Gebrauchslage unten liegenden Bereich (31) der Pflanzenschutzhülle (1) vorgesehen ist.

3. Pflanzenschutzhülle nach Anspruch 1 oder 2, **dadurch gekennzeichnet, dass** mehrere Zungen (33) vorgesehen sind, die in einem Bereich der Pflanzenschulzhülle (1), insbesondere zu wenigstens einer Gruppe von Zungen 33 zusammengefasst, angeordnet sind.

4. Pflanzenschutzhülle nach einem der Ansprüche 1 bis 3, **dadurch gekennzeichnet, dass** je wenigstens eine Zunge (33) auf einander gegenüberliegenden/benachbarten Seiten der Pflanzenschutzhülle (1) vorgesehen sind.

5. Pflanzenschutzhülle nach Anspruch 1, **dadurch gekennzeichnet, dass** der Fußbereich (38) im Wesentlichen rechteckförmig oder quadratisch ist.

6. Pflanzenschutzhülle nach Anspruch 1, **dadurch gekennzeichnet, dass** der Kopfbereich (39) der Zunge (33) mit geraden Linien begrenzt ist.

7. Pflanzenschutzhülle nach Anspruch 1, **dadurch gekennzeichnet, dass** der Kopfbereich (39) der Zunge (33) von gekrümmten Linien begrenzt ist.

8. Pflanzenschutzhülle nach Anspruch 6 und 7, **dadurch gekennzeichnet, dass** der Kopfbereich (39) der Zunge (33) von einer Kombination aus geraden und gekrümmten Linien begrenzt ist.

9. Pflanzenschutzhülle nach einem der Ansprüche 1 bis 8, **dadurch gekennzeichnet, dass** die Pflanzenschutzhülle (1) eine Röhre mit polygonaler, insbesondere quadratischer Querschnittsform ist oder die Form eines Mantels eines Zylinders, insbesondere eines Kreiszylinders aufweist.

10. Pflanzenschutzhülle nach Anspruch 9, **dadurch gekennzeichnet, dass** die Pflanzenschutzhülle (1) aus einem zu einer Röhre gefalteten Zuschnitt (2) aus blattförmigem Werkstoff besteht.

11. Pflanzenschutzhülle nach einem der Ansprüche 1 bis 10, **dadurch gekennzeichnet, dass** die Pflanzenschutzhülle (1) aus durchscheinendem und UV-stabilen Polypropylen oder Polyethylen besteht.

12. Pflanzenschutzhülle nach Anspruch 11, **dadurch gekennzeichnet, dass** der Zuschnitt (2) der Pflanzenschutzhülle (1)eine Doppelstegplatte ist.

## Claims

1. Protective casing for plants (1) in the form of a tube to be placed over a plant, wherein at least one three-sided freely-cut tongue (33) is provided in the wall of the protective casing for plants (1), which can be pressed out of the wall inwards or outwards in relation to the protective casing for plants to form ventilation openings by bending around a bending line, wherein the bending line lies in the region (35), in which the tongue (33) is connected to the wall of the protective casing for plants (1), **characterised in that** the tongue (33) has a narrower foot region (38) connected to the wall of the protective casing for plants (1) and a broader head region (39) with respect to the foot region (38) and that the head region (39) of the tongue (33) is located above the foot region (38) in the use position.

2. The protective casing for plants according to claim 1, **characterised in that** the tongue (33) is provided in the lower region (31) of the protective casing for plants (1) in the use position.

3. The protective casing for plants according to claim 1 or 2, **characterised in that** a plurality of tongues (33) are provided which are disposed in a region of the protective casing for plants (1), in particular are combined into at least one group of tongues (33).

4. The protective casing for plants according to any one of claims 1 to 3, **characterised in that** at least one tongue (33) is provided on opposite/adjacent sides of the protective casing for plants (1).

5. The protective casing for plants according to claim 1, **characterised in that** the foot region (38) is substantially rectangular or square.

6. The protective casing for plants according to claim 1, **characterised in that** the head region (39) of the tongue (33) is delimited by straight lines.

7. The protective casing for plants according to claim 1, **characterised in that** the head region (39) of the tongue (33) is delimited by curved lines.

8. The protective casing for plants according to claim 6 and 7, **characterised in that** the head region (39) of the tongue (33) is delimited by a combination of straight and curved lines.

9. The protective casing for plants according to any one of claims 1 to 8, **characterised in that** the protective casing for plants (1) is a tube having a polygonal, in particular a square cross-sectional shape or is the shape of a jacket of a cylinder, in particular of a circular cylinder.

10. The protective casing for plants according to claim 9, **characterised in that** the protective casing for plants (1) consists of a blank (2) of sheet-like material folded into a tube.

11. The protective casing for plants according to,any one of claims 1 to 10, **characterised in that** the protective casing for plants (1) consists of translucent and UV-stable polypropylene or polyethylene.

12. The protective casing for plants according to claim 11, **characterised in that** the blank (2) of the protective casing for plants (1) is a double-webbed plate.

## Revendications

1. Enveloppe protectrice de plante (1) sous la forme d'un tube se fichant sur une plante, étant prévue, dans la paroi de l'enveloppe protectrice de plante (1), au moins une languette (33) découpée de trois côtés qui peut être repoussée vers l'intérieur ou l'extérieur par rapport à l'enveloppe protectrice de plante depuis la paroi pour former des orifices de ventilation en la recourbant autour d'une ligne de courbure, la ligne de courbure se trouvant dans la zone (35) où la languette (33) est reliée à la paroi de l'enveloppe protectrice de plante (1), **caractérisée en ce que** la languette (33) présente une partie pied étroite (38) reliée à la paroi de l'enveloppe protectrice de plante (1) et une partie tête (39) plus large que la partie pied (38) et que la partie tête (39) de la languette (33) est, en position d'utilisation, disposée au-dessus de la partie pied (38).

2. Enveloppe protectrice de plante selon la revendication 1, **caractérisée en ce que** la languette (33) est prévue dans la partie inférieure (31) de l'enveloppe protectrice de plante (1) en position d'utilisation.

3. Enveloppe protectrice de plante selon la revendication 1 ou 2, **caractérisée en ce que** sont prévues plusieurs languettes (33) qui sont disposées dans une partie de l'enveloppe protectrice de plante (1), en particulier regroupées en au moins un groupe de languettes (33).

4. Enveloppe protectrice de plante selon une des revendications 1 à 3, **caractérisée en ce qu'**il est prévu au moins une languette (33) sur chacune des faces opposées/voisines de l'enveloppe protectrice de plante (1).

5. Enveloppe protectrice de plante selon la revendication 1, **caractérisée en ce que** la partie pied (38) est sensiblement rectangulaire ou carrée.

6. Enveloppe protectrice de plante selon la revendication 1, **caractérisée en ce que** la partie tête (39) de la languette (33) est limitée par des lignes droites.

7. Enveloppe protectrice de plante selon la revendication 1, **caractérisée en ce que** la partie tête (39) de la languette (33) est limitée par des lignes courbes.

8. Enveloppe protectrice de plante selon les revendications 6 et 7, **caractérisée en ce que** la partie tête (39) de la languette (33) est limitée par une combinaison de lignes droites et courbes.

9. Enveloppe protectrice de plante selon une des revendications 1 à 8, **caractérisée en ce que** l'enveloppe protectrice de plante (1) présente un tube ayant une section transversale de forme polygonale, en particulier carrée, ou la forme d'une chemise de cylindre, en particulier de cylindre circulaire.

10. Enveloppe protectrice de plante selon la revendication 9, **caractérisée en ce que** l'enveloppe protectrice de plante (1) consiste en une découpe (2) pliée en tube de feuille de matériau.

11. Enveloppe protectrice de plante selon une des revendications 1 à 10, **caractérisée en ce que** l'enveloppe protectrice de plante (1) est composée de polypropylène ou de polyéthylène transparent et stable aux UV.

12. Enveloppe protectrice de plante selon la revendication 11, **caractérisée en ce que** la découpe (2) de l'enveloppe protectrice de plante (1) est une plaque à double traverse.
